# EUROPEAN PATENT APPLICATION

(11) **EP 0 963 938 A2**
(43) Date of publication of application: **15.12.1999**
(21) Application number: 98121640.1
(22) Date of filing: 12.11.1998
(51) Int. Cl.: B65H 75/14

(54) **Plastic reel**

(30) Priority: 12.06.1998 JP 16404798; 14.09.1998 JP 25959898
(71) Applicant: Moldec Co., Ltd., Adachi-gun, Fukushima (JP)
(72) Inventor: Takeuchi, Shinobu Moldec Co., Ltd., Adachi-gun, Fukushima (JP)
(74) Representative: Wächtershäuser, Günter, Prof. Dr.

(57) **Abstract**

A plastic reel comprises a cylindrical collar 1 as a winding core and disks 2 as flanges which are fitted to both sides of the cylindrical collar 1, wherein the collar 1 and the disks 2 are made of a pulp-containing plastic material; a ringed projection 5 whose outer diameter is smaller than an inner diameter of the collar 1 is formed on a side surface of each of the disks 2: and each of the engaging portions for engaging the disks 2 with the collar 1 comprises an engaging pawl 6 formed in an outer peripheral wall of the ringed projection 5 and an engaging opening 3 formed at a position near an edge of the collar 1.

## Description

The present invention relates to a plastic reel formed by injection molding a pulp-containing plastic material and a method for producing the same.

A reel on which a linear material is wound has been used for an automated machine so that the linear material is rewound to be processed by the automated machine in various technical fields. Such reel is generally made of metal, plastic, paper or the like. However, a reel of plastic or paper has been generally used because the reel is often disposed after the linear material wound on the reel has been used in a factory. A plastic reel has problems that cost for manufacturing is high and a large amount of poisonous gases is produced when the reel is incinerated. Further, for the plastic reel, carbon is incorporated as an anti-static additive to reduce the surface electrical resistance from a viewpoint of reducing electrostatic charges. However, it was difficult to adjust an amount of carbon to be mixed.

On the other hand, a reel of paper has a weak point of poor strength although the manufacturing cost is inexpensive. Further, since it easily produces dust, there was restricted in using in a clean room in a semiconductor manufacturing plant and so on. The reel of paper after used has generally been incinerated. However, an incinerating equipment was required and there was a problem of the generation of dioxin due to burning of pulp.

It is an object of the present invention to provide a plastic reel and a method for producing the plastic reel, which provide many advantages such that a large scale production is permitted by injection-molding a pulp-containing plastic material while providing a high strength; transportation and assembling works are easy; the plastic reel has a self-combusting property without requiring a relatively large-sized incinerating equipment for disposal after the use while the generation of dioxin is suppressed to be low; and used paper can be utilized to reduce the manufacturing cost while a purpose of resource recycling can be achieved.

In accordance with an aspect of the present invention, there is provided a plastic reel comprising a cylindrical collar as a winding core and disks as flanges which are fitted to both sides of the cylindrical collar, wherein the collar and the disks are made of a pulp-containing plastic material; a ringed projection whose outer diameter is smaller than an inner diameter of the collar is formed on a side surface of each of the disks: and engaging portions are formed on each of the ringed projections at positions near both edges of the collar so that the disks are engaged with the collar.

In accordance with another aspect of the present invention, there is provided a method for producing a plastic reel comprising a cylindrical collar as a winding core and disks as flanges which are fitted to both sides of the collar, wherein the cylindrical collar and the disks are separately formed by injection molding using a pulp material composed of a polymer and pulp of paper so that a ringed projection whose outer diameter is smaller than an inner diameter of the collar is formed on a side surface of each of the disks, and engaging portions are formed on each of the ringed projections at positions near both edges of the collar whereby the disks are engaged with the collar.

In drawings;
Figure 1 is a perspective view of an embodiment of the plastic reel according to the present invention;
Figure 2 is a side view of the plastic reel shown in Figure 1;
Figure 3 is a longitudinal cross-sectional view of the plastic reel shown in Figure 1;
Figure 4A is a cross-sectional view showing an engaging state between an engaging opening and an engaging pawl;
Figure 4B is a plan view showing the relation between the engaging opening and the engaging pawl;
Figure 5 is an enlarged front view showing a supporting shaft insertion opening formed at a central portion of a disk;
Figure 6 is an enlarged cross-sectional view showing a lead string formed integrally with the disk;
Figure 7 is a cross-sectional view showing an embodiment of the plastic reel wherein a ringed projection is formed to have a U-shaped form in cross-section;
Figure 8 is a front view of an embodiment of a color wherein slits are formed to communicate engaging openings with both ends of the collar;
Figure 9A is an enlarged cross-sectional view showing an engaging state between an engaging opening in the collar and an engaging pawl in the disk shown in Figure 8; and
Figure 9B is a plan view showing the relation between the engaging opening and the engaging pawl.

Preferred embodiments of the plastic reel according to the present invention will be described with reference to the drawings.

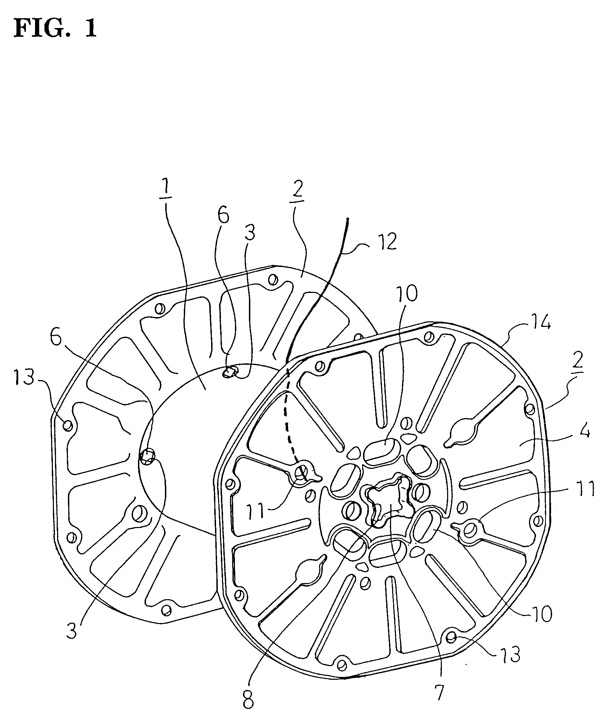

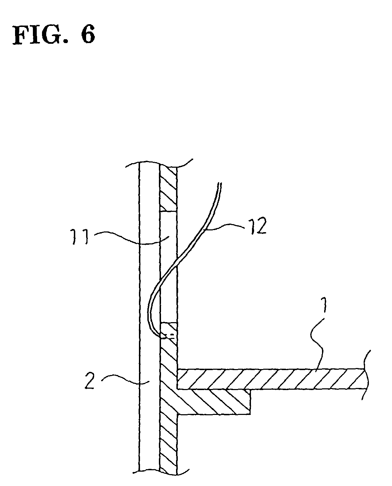

Figures 1 to 6 show an embodiment of the plastic reel of the present invention. A plastic reel comprises a collar 1 as a cylindrical winding core and disks 2, 2 as flanges which are attached to both sides of the collar 1. The collar 1 and the disks 2 are formed by injection-molding a plastic material containing pulp (hereinbelow, referred to as a pulp-containing plastic material).

As the pulp, pulp of paper is preferably used. In particular, when pulp of used paper recovered from disposed newspapers is used, it is useful for resource recycling. As a method for preparing the pulp of used paper, for example, used paper is swollen with water; impurities are removed; an additive for prohibiting connection between paper fibers in the pulp is added, and then, the pulp is dehydrated to adjust a water content in the pulp material. Then, the pulp material is put in a pelletizer to form a pelletized pulp material. The pelletized pulp material is mixed with a polymer such as polypropylene, polyvinyl chloride or the like. After the mixture is kneaded, the material is put into an injection molding machine to form collars and disks separately. A collar 1 and two disks 2 thus obtained are combined to form a plastic reel.

Alternatively, a pelletized pulp material and a pelletized plastic material may be previously mixed followed by melting, and the molten mixture is put into a pelletizer to obtain a pelletized mixture of pulp and plastic. Then, the pelletized material may be molten again and the molten material is injection-molded to form the collar 1 and the disk 2 separately.

A preferred proportion of the pulp and the polymer is such that the pulp is from 30-70 wt%. The above-mentioned range of proportion provides a plastic reel having a high tensile strength, a high bending strength and a self-combusting property. The self-burning property means that the plastic reel can easily be burnt by firing with a lighter such as a match.

When the proportion of the pulp is less than 30 wt%, drops of molten plastic occurring during the burning of the plastic reel are solidified, and it is difficult to obtain complete incineration. On the other hand, when the proportion of the pulp exceeds 70 wt%, fluidity of the pulp-containing plastic material in the injection molding is decreased. Further, there is a danger of burning of the pulp-containing plastic material in a process for heating the material before the injection molding. In the preparation of collars and disks by using the above-mentioned range of proportion, the injection molding is conducted under a pressure of 700 kg/cm² to 1,200 kg/cm², preferably 800 kg/cm² to 900 kg/cm², and a temperature of 160°C to 200°C, preferably 175°C to 180°C.

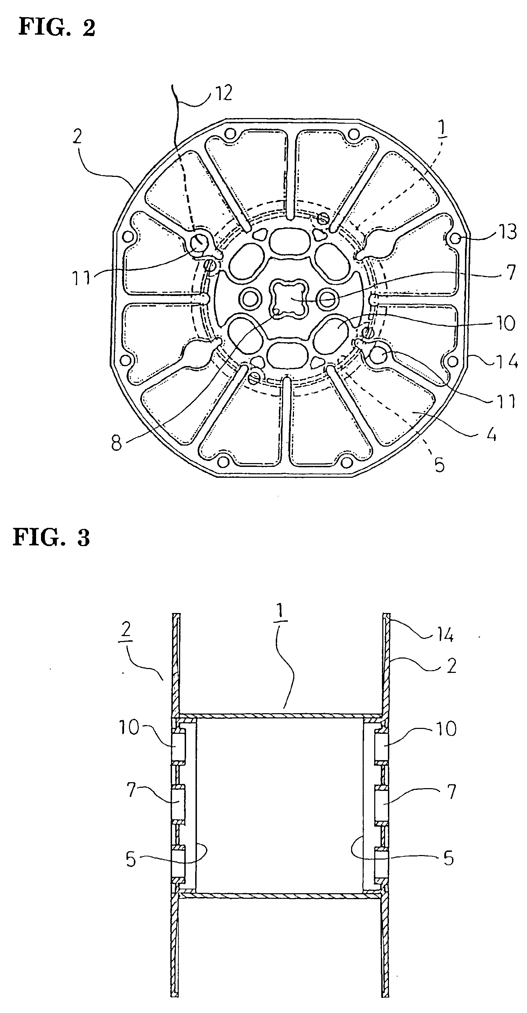

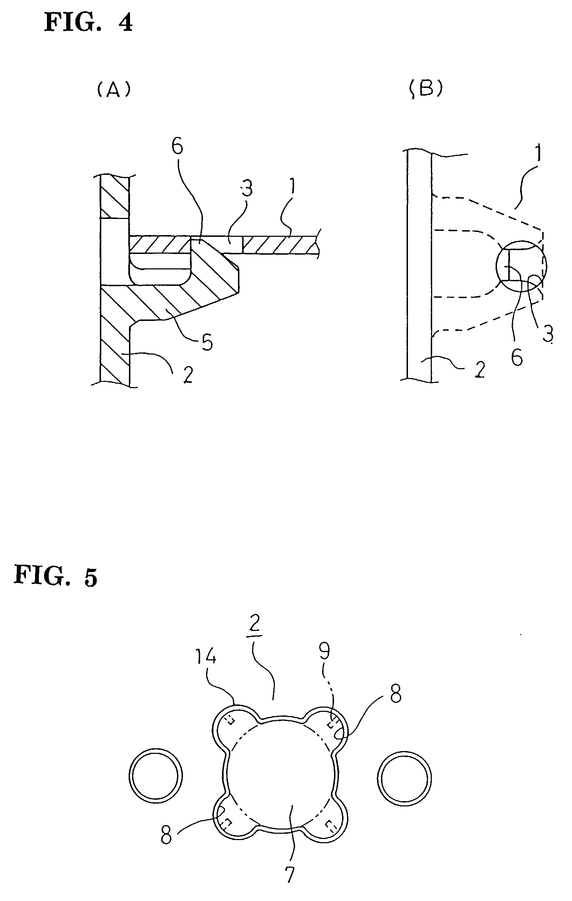

Circular engaging openings 3 are formed at an angular interval of 90° at positions near both end openings of the collar 1 as a cylindrical winding core. Each of the disks as flanges has a substantially octagonal shape wherein at least opposing sides with respect to the center of the disk 2 should have a linear line. Further, corrugated ribs 4 are formed in both sides of each of the disks 2 so as to increase the mechanical strength of the disks. In a side face of each of the disks 2, a ringed projection 5 whose outer diameter is smaller than an inner diameter of the collar 1 is formed as shown in Figure 3. Each of the disks 2 is so formed that the wall thickness is gradually reduced from the root portion of the ringed projection toward an outer periphery of the disk 2. A plurality of engaging pawls 6 each having a free end provided with a jaw or a hook are formed on the ringed projection 5, and a plurality of engaging openings 3 are formed at positions near both end openings of the collar 1 so as to correspond to the engaging pawls 6. Each of the engaging pawls 6 and each of the circular engaging openings 3 constitute an engaging portion as shown in Figures 4A and 4B.

As shown in Figure 2, a supporting shaft insertion opening 7 is formed at a central portion of each of the disks 2. Around the supporting shaft insertion opening 7, four clearance grooves 8 having a semi-circular shape are formed to provide a generally round cross-like shape, as shown in Figure 5. Gates 9 for injecting the pulp-containing plastic material are formed in a recessed portion of the clearance grooves 8, the gates being indicated by imaginary lines. The gates 9 are removed after the injection molding. Since the gates are formed in the recessed portions, operations for removing the gates are easy. For the purpose of increasing the strength of the portion around the supporting shaft insertion opening 7, the wall thickness around the supporting shaft insertion opening 7 and the clearance grooves 8 is increased to form a thickened wall portion 14. Further, 6 finger holes 10 of elliptic shape are formed around the supporting shaft insertion opening 7 as shown in Figure 2. The finger holes 10 facilitate assembly works of attaching the disks 2 to the collar 1 and handling the plastic reel.

Circular openings 11 are formed in each of the disks 2 at positions outside of the ringed projection 5. An end of a lead string 12 which is for connecting a leading end of a linear material to be wound on the plastic reel, is embedded at a position near one of the circular openings 11 and the other end of the lead string 12 is drawn through the circular opening 11 toward the side of collar 1. Material for the lead string 12 may be the same, for example, polypropylene, as that for the disk 2. In an outer peripheral portion of each of the disks 2, a plurality of openings 13 for fitting a leading end of the linear material are formed, as shown in Figure 1..

In producing the disk 2 by injection-molding, since four gates 9 are provided, as indicated by imaginary lines in Figure 5, in the clearance grooves 8, which are provided in a cross-like shape, around the supporting shaft insertion opening 7, the pulp-containing plastic material is injected through the gates 9 radially into metallic dies for forming the disk 2. Namely, the pulp-containing plastic material is injected from a central portion of the disk 2 having a plate-like shape through a plurality of gates whereby the injected material flows uniformly in the metallic dies so that a molded product having a high mechanical strength as desirably designed can be obtained.

The gates 9 have to be removed after the injection-molding. However, since the gates are formed so as not to interfere with the supporting shaft insertion opening 7 to which a rod for supporting the plastic reel is inserted, it is unnecessary to completely remove burns in the gates 9. Further, since six finger holes 10 of elliptic shape are formed as shown in Figure 2, radial paths for the injected material can be formed whereby the injected material can be uniformly spread for a short time. As a result, the disk 2 having a high mechanical strength can be obtained.

The plastic reel of the present invention has a three-piece type structure wherein the collar 1 and the disks 2 are separately formed by injection-molding. Accordingly, they can be transported in a disassembled and overlaid state whereby the overall volume during transportation can be reduced and a risk of the damage of the elements during transportation can be reduced.

In assembling the collar 1 and the disks 2, the color is first supported vertically and a disk 2 is held horizontally above the collar 1 and is attached to the collar 1 by pushing the ringed projection 5 to the inner diameter of the collar 1 so that the engaging pawls 6 formed on the ringed projection 5 can be push-fit with the circular engaging openings 3 formed in the collar 1 as shown in Figure 4A, thus, a firm engagement is assured. The other disk 2 can be fitted to the collar at the opposite side of the collar in the same manner as above.

Each of the engaging openings has a circular form as shown in Figure 4B. Accordingly, the concentration of a stress applied by the engaging pawl 6 can be reduced.

When various collars 1 having different widths are previously produced, a plastic reel having a required width can be assembled in a factory site. Since corrugated ribs 4 are formed on the both surfaces of each of the disks 2, a number of assembled plastic reels can be stacked so as to meet recessed portions with projected portions and a possibility of slippage of the stacked plastic reel can be reduced even in transporting them.

When a linear material such as a wire, a cord, a belt, a carrier for holding semiconductors is wound on the plastic reel of the present invention, the free end of the lead string 12, the other end of which is firmly attached to a disk 2, is fastened to a leading end of the wound linear material. Since the other end of the lead string 12 is firmly attached to the disk 2 in the injection molding, it is unnecessary to fix the lead string 12. Therefore, winding operations for the linear material is easy, and reliable fastening is obtainable.

When the plastic reel on which the linear material is wound is to be fitted to an automated machine, the handling is easy because fingers of an operator can be inserted in the finger insertion poles 10 formed in the disks 2. Further, the periphery of the finger insertion holes 10 is framed with a thickened wall portion in which corner portions are round, a sufficient strength can be provided to the finger insertion holes 10 as well as assuring the protection of the operators fingers. Further, since each of the disks 2 has a generally octagonal shape wherein at least one pair of opposing sides of the periphery of the disks 2 are formed to have a linear line, the rolling of the plastic reel can be prevented even when it is placed in an inclined plane..

As described above, the pulp-containing plastic material is contained in the plastic reel, paper fibers in the pulp function as a reinforcing material, and the tensile strength and the flexural strength of the plastic reel of the present invention are higher than those of a plastic reel formed by using a plastic material solely.

In the measurement of the physical properties of the plastic reel formed by injection-molding a pulp-containing plastic material consisting of 50 wt% of pulp of paper and 50 wt% of polypropylene, it was found that the tensile strength was 452 kg/cm²; the bending strength was 737 kg/cm², and it was easily fired with a single of match wherein there was no drop of molten material during incineration. On the other hand, in a case of using polypropylene solely for injection-molding, it was found that the tensile strength was 240 kg/cm²; bending strength was 370 kg/cm², and a fairly intense heating power was needed to incinerating it wherein there took place drops of molten material.

As described above, the disk 2 has the corrugated ribs 4 and the thickened wall portion 14, and is formed so that the wall thickness of the disk 2 is gradually reduced from the root portion of the ringed projection 5 toward the outer peripheral portion of the disk 2. Accordingly, when a load is applied to the outer peripheral portion of the disk 2, an applied stress is uniformly dispersed from the ringed projection 5 to the outer peripheral portion whereby a danger of the breakage due to a bending force or an impact can remarkably be reduced. If any disk 2 is broken, the broken disk can easily be replaced by disengaging the engaging projections 6 from the engaging openings 3 as shown in Figure 4.

Further, the proportion of the pulp of paper in the mixed material to be injected is in a range of 30-70 wt%, the plastic reel can easily be incinerated without requiring a large incinerating equipment. Further, the plastic reel of the present invention has a self-combusting property. Accordingly, it can easily be fired with a lighter and there is no possibility that molten plastic material is solidified. Further, the generation of dioxin which is resulted from firing the pulp of paper can remarkably reduced and complete incineration is obtainable. Ash left after the incineration is in a powder form, which is easy to dispose, and there is a small possibility of producing dark cinders as in a case of firing paper.

Further, in a case of disposing the plastic reel by burying in the ground, the rate of decomposition of the plastic reel is high because it includes the pulp of paper. Further, since the pulp of paper itself disappears due to decomposition, the disposal is easy. In addition, since the lead string 12 is formed of the same material as the collar 1 and the disk 2, it is unnecessary to separate the lead string 12 from the plastic reel body for resource recycling.

For the purpose of imparting an anti-static performance to the plastic reel, the collar and the disk may be injection-molded under the condition that the melt temperature of the pulp-containing plastic material is increased. In this case, pulp fibers in the material are partially burnt to provide a carbonized state whereby electrical resistance of the plastic reel can be reduced. In this case, the conventional adjusting operation in mixing carbon in the pulp-containing plastic material becomes unnecessary.

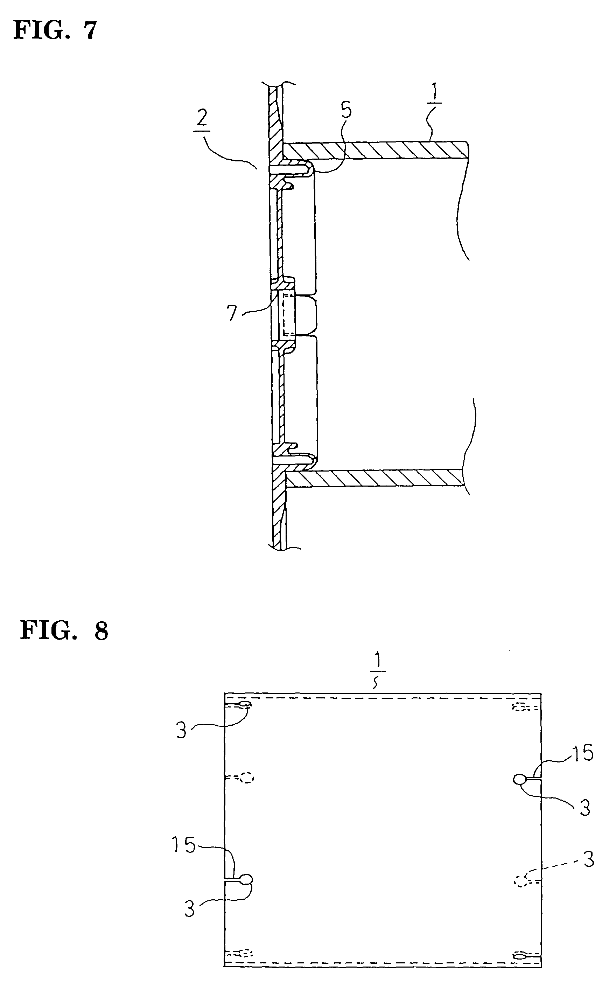

Figure 7 shows another embodiment of the plastic reel of the present invention. In the embodiment shown in Figure 7, the ringed projection 5 of the disk 2, which is inserted into an opening of the collar 1, is formed to have a U-shaped form in cross-section. The formation of the U-shaped form is employed to the disk 2 in considering the following advantage. Namely, when a plastic reel is accidentally dropped so that a disk 2 fits the floor, a large stress concentrates around the ringed projection 5 fixed to the opening of the collar 1. However, when the ringed projection 5 is formed to have the U-shaped form in cross-section, the U-shaped portion is deformed to absorb the stress whereby occurrence of breakage at this portion can be prevented.

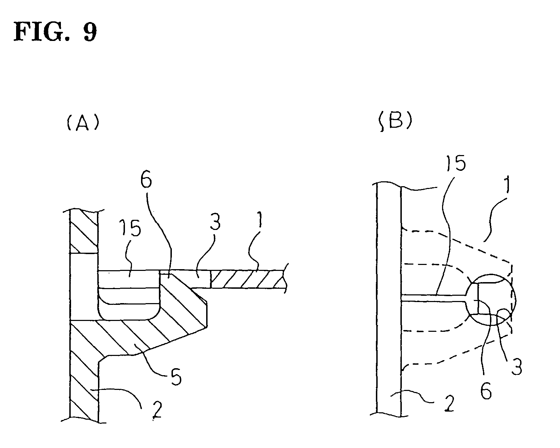

Figures 8 and 9 show another embodiment of the present invention wherein a slit 15 is formed so as to communicate each of the circular engaging openings 3, which are formed at angular intervals of 90° in the vicinity of both end openings of the collar 1, with each free end of the collar 1. The slit 15 makes it easy to insert the engaging projection 6 into the engaging opening 3 when the engaging projection 6 formed on the ringed projection 5 is forced to enter into the engaging opening 3 in the assembling of the collar 1 and the disks 2.

In the embodiment shown in Figure 5, four clearance grooves 8 are formed around the supporting shaft insertion opening 7. However, a suitable number of clearance grooves such as 3 or 5 grooves may be formed.

## Claims

1. In a plastic reel comprising a cylindrical collar as a winding core and disks as flanges which are fitted to both sides of the cylindrical collar, the plastic reel being characterized in that the collar and the disks are made of a pulp-containing plastic material; a ringed projection whose outer diameter is smaller than an inner diameter of the collar is formed on a side surface of each of the disks: and engaging portions are formed on each of the ringed projections at positions near both edges of the collar so that the disks are engaged with the collar.

2. The plastic reel according to Claim 1, wherein the ringed projection is in a U-shaped form in cross section.

3. The plastic reel according to Claim 1 or 2, wherein each of the engaging portions for engaging the disks with the collar comprises an engaging pawl formed in an outer peripheral wall of the ringed projection and an engaging opening formed at a position near an edge of the collar.

4. The plastic reel according to Claim 3, wherein a slit is formed to communicate the engaging opening with a free end of the collar.

5. The plastic reel according to any one of Claims 1 to 4, wherein an end of a lead string, which is for connecting a leading end of a linear product to be wound on the plastic reel, is embedded in a side surface of a disk at a position near the ringed projection.

6. The plastic reel according to any one of Claims 1 to 5, wherein the collar and the disks have carbonized portions.

7. In a method for producing a plastic reel comprising a cylindrical collar as a winding core and disks as flanges which are fitted to both sides of the collar, the method being characterized in that the cylindrical collar and the disks are separately formed by injection molding using a pulp material composed of a polymer and pulp of paper so that a ringed projection whose outer diameter is smaller than an inner diameter of the collar is formed on a side surface of each of the disks, and engaging portions are formed on each of the ringed projections at positions near both edges of the collar whereby the disks are engaged with the collar.

8. The method for producing a plastic reel according to Claim 7, wherein gates for injecting the pulp material are formed in an inner periphery of a supporting shaft insertion opening at the center of each of the disks.

9. The method for producing a plastic reel according to Claim 7, wherein the pulp material for the collar and the disks are injection-molded under an elevated temperature condition so that the pulp of paper contained in the collar and the disks is partially carbonized.

10. The method for producing a plastic reel according to Claim 7, wherein the proportion of the pulp of paper and the polymer is such that the pulp is from 30-70 wt%.
